# EUROPEAN PATENT APPLICATION

(11) **EP 4 668 549 A1**
(43) Date of publication of application: **24.12.2025**
(21) Application number: 24183785.5
(22) Date of filing: 21.06.2024
(51) Int. Cl.: H02K 5/20, H02K 7/116, H02K 5/15

(54) **HOUSING ASSEMBLY FOR AN ELECTRIC DRIVE UNIT OF A VEHICLE, CARRIER PART FOR A HOUSING ASSEMBLY, HOUSING PART FOR A HOUSING ASSEMBLY, ELECTRIC DRIVE UNIT FOR A VEHICLE, VEHICLE AND METHOD FOR ASSEMBLING A HOUSING ASSEMBLY**

(71) Applicant: Volvo Car Corporation, 405 31 Göteborg (SE)
(72) Inventor: PETROV, Peter, 40531 Göteborg (SE)
(74) Representative: Maiwald GmbH

(57) **Abstract**

The disclosure relates to a housing assembly (10) for an electric drive unit (100) of a vehicle. The housing assembly (10) comprises a first housing part (12) forming at least a portion of at least one chamber (18) for receiving a drive component (22). Moreover, the housing assembly (10) comprises a second housing part (14) forming at least a portion of at least one chamber (20) for receiving a drive component (24). Additionally, the housing assembly (10) comprises a carrier part (16) for supporting at least one drive component (22, 24). The first housing part (12) and the second housing part (14) are connected. Furthermore, the first housing part (12) and the second housing part (14) together separate an interior (96) of the housing assembly (10) from an exterior (98) of the housing assembly (10). The carrier part (16) is entirely provided in the interior (96) of the housing assembly (10). Further, the disclosure relates to a carrier part, a housing part, an electric drive unit, a vehicle and a method for assembling a housing assembly (10).

## Description

### TECHNICAL FIELD

The present disclosure relates to a housing assembly for an electric drive unit of a vehicle, a carrier part for such a housing assembly, a housing part for such a housing assembly, an electric drive unit for a vehicle, a vehicle, and a method for assembling a housing assembly.

### BACKGROUND ART

A housing assembly for an electric drive unit of a vehicle is used to enclose and support components of the electric drive unit. Such components may comprise one or more electric machines and/or one or more gear units. In this context, a gear unit may be formed as a transmission unit or as a differential gear unit. Arranging these components of the electric drive unit in the same housing assembly allows for a compact design of the drive system of the vehicle. It is noted that a vehicle comprising an electric drive unit may be called an electric vehicle. Such an electric vehicle may be a battery electric vehicle if the electric battery is used as a single source of traction energy. In case other sources of traction energy are used additionally, the electric vehicle may be called a hybrid electric vehicle. In this context, another source of traction energy may be a combustion engine or a fuel cell.

### SUMMARY

It is an objective of the present disclosure to further improve housing assemblies for electric drive units of vehicles.

This problem is at least partially solved or alleviated by the subject matter of the independent claims of the present disclosure, wherein further examples are incorporated in the dependent claims, the description and/or in the drawings.

According to a first aspect, there is provided a housing assembly for an electric drive unit of a vehicle, the housing assembly comprises a first housing part forming at least a portion of at least one chamber for receiving a drive component. Moreover, the housing assembly comprises a second housing part forming at least a portion of at least one chamber for receiving a drive component. Additionally, the housing assembly comprises a carrier part for supporting at least one drive component. The first housing part and the second housing part are connected. Furthermore, the first housing part and the second housing part together separate an interior of the housing assembly from an exterior of the housing assembly. The carrier part is entirely provided in the interior of the housing assembly.

In other words, the first housing part and the second housing part conjointly separate an interior of the housing assembly from an exterior of the housing assembly. Since the carrier part is entirely provided in the interior of the housing assembly, the carrier part does not contribute to the separation of the interior of the housing assembly from the exterior of the housing assembly. Thus, the first housing part and the second housing part are configured to enclose drive components of the electric drive unit of the vehicle. Put otherwise, the first housing part and the second housing part together or conjointly form an outer shell or enclosure of the housing assembly. It is noted that the fact that the first housing part and the second housing part conjointly or together separate an interior of the housing assembly from an exterior of the housing assembly does not exclude the presence of openings or interfaces which provide a certain connection between the interior of the housing assembly and the exterior of the housing assembly and which are necessary for the functioning of the housing assembly, i.e. an electric drive unit comprising the housing assembly. Such openings or interfaces may be configured to receive electric lines or to provide electric connections. Additionally or alternatively, such openings or interfaces may be configured to allow a fluid, e.g. a coolant or cooling agent, to be transferred from the interior of the housing assembly to the exterior of the housing assembly or vice versa. Further additionally or alternatively, such openings or interfaces may be configured to allow shafts or other drive elements to extend through the first housing part and/or through the second housing part. Optionally, the openings or interfaces are equipped with suitable sealing elements, e.g. O-rings.

According to one example, the housing assembly comprises an interface for at least one output shaft. According to a further example, the housing assembly comprises precisely one interface for an output shaft. According to a further example, the housing assembly comprises precisely two interfaces for output shafts.

In the context of the present disclosure, a drive component may be configured as or comprise at least one of the following elements: an electric machine, a gear unit, a differential gear unit, a shaft, an assembly of at least two of the foregoing elements.

In the context of the present disclosure, each of the first housing part and the second housing part may comprise a recess or cavity for forming at least a portion of at least one chamber for receiving a drive component. The recess or cavity of the first housing part and the recess or cavity of the second housing part together form the interior of the housing assembly. Alternatively, only one of the first housing part and the second housing part may comprise a recess or cavity, wherein the respective other one of the first housing part and the second housing part is formed as a housing cover which is for example plate-shaped. In this case, the interior of the housing assembly is formed by the recess or cavity of the respective first or second housing part, wherein the recess or cavity is closed by the respective other housing part formed as a housing cover.

The interior of the housing assembly is completely formed or enclosed by the connected first housing part and the second housing part. This means that only one connection interface, i.e. the connection interface for connecting the first housing part and the second housing part, is necessary in order to separate the interior of the housing assembly from the exterior of the housing assembly. A sealing may be provided at this connection interface. The fact that only one connection interface and, if necessary, only one sealing is necessary, renders the housing assembly structurally simple. Moreover, manufacturing is facilitated due to the single connection interface.

It is noted that due to the fact that the carrier part is entirely provided in the interior of the housing assembly, it is not necessary to seal the carrier part with respect to the first housing part and/or the second housing part.

The carrier part may be essentially plate-shaped or disc-shaped. This leads to a compact design of the carrier part and, thus, the housing assembly.

The carrier part may be configured as a cover of at least one chamber of the housing assembly. This means that the cover part delimits this at least one chamber of the housing assembly from the remaining portions of the interior of the housing assembly. In other words, the carrier part may subdivide the interior of the housing assembly into at least two portions or chambers.

The carrier part may be connected to the first housing part only. Alternatively, the carrier part may be connected to the second housing part only. According to a further alternative, the carrier part may be connected to both the first housing part and the second housing part.

According to an example, the carrier part comprises at least one bearing seat for a shaft. Thus, at least one shaft may be supported on the carrier part. The shaft may be an output shaft of an electric machine, a shaft of a gear unit or a shaft drivingly connecting an electric machine and a gear unit. Providing a bearing seat on the carrier part allows to support shafts where needed. Consequently, the housing assembly and an electric drive unit using the housing assembly may be designed in a compact manner.

According to a further example, the carrier part comprises precisely two bearing seats, each configured for supporting a shaft.

In the above examples, the bearing seat may be configured for extending an element, e.g. a shaft, through the carrier part. For this purpose, the bearing seat of the carrier part may comprise a through hole. The element extending through the carrier part may be a shaft extending from one or a first chamber of the interior into another or a second chamber of the interior. Additionally or alternatively, the bearing seat may be configured to separate a first side of the carrier part from a second side of the carrier part. In this alternative, the bearing seat does not comprise a through hole but is entirely formed on one of the first side and the second side of the carrier part.

According to an example, the carrier part is connected to the first housing part via a substantially circular positioning interface. I.e., a portion of the carrier part and a portion of the first housing part which contact or engage one another in an assembled state of the housing assembly, have a substantially circular geometry. In an example, both the portion of the carrier part and the portion of the first housing part are formed as a lateral skin surface of a circular cylinder. Alternatively, the portion of the carrier part and the portion of the first housing part are formed as a portion of a lateral skin surface of a truncated cone. It is also possible that the portion of the carrier part and the portion of the first housing part comprise both a sub-portion formed as a lateral skin surface of a circular cylinder and a sub-portion formed as a portion of a lateral skin surface of a truncated cone. The positioning interface may be configured as a self-centering interface, wherein the carrier part is centered in the correct position with respect to the first housing part. Altogether, a substantially circular positioning interface allows for simple and reliable positioning of the carrier part with respect to the first housing part.

According to an example, the housing assembly further comprises a singular positioning element for angular positioning of the carrier part along the substantially circular positioning interface. The positioning element may be configured as or comprise a bolt or a pin. The positioning element may be configured as a separate part connected to the first housing part or to the carrier part. Alternatively, the positioning element may be configured as an integral portion of the first housing part or the carrier part. The respective other part, i.e. the part not comprising the positioning element may comprise a positioning counter-feature configured to interact or engage the positioning element. In a case in which the positioning element is formed as a bolt or pin, the positioning counter-feature may comprise a hole or recess configured to receive the positioning element. In general, the positioning element and the substantially circular positioning interface are configured such that the carrier part can only be attached to the first housing part in one single relative orientation.

According to an example, at least one bearing seat is arranged centrically with respect to the positioning interface. Additionally or alternatively, at least one bearing seat is arranged eccentrically with respect to the positioning interface. In any alternative, a bearing and, thus, an associated shaft or drive element may be reliably supported on the carrier part. The concentric and/or eccentric arrangement of the bearing seat ensures flexible positioning of the bearing seats where needed in a specific design of a housing assembly or electric drive unit using the housing assembly. It is understood that in a case in which the carrier part comprises a bearing seat, the positioning interface is configured to support loads resulting from the support of a shaft or drive element on the bearing seat.

According to an example, the carrier part is arranged between a first chamber configured for receiving an electric machine and a second chamber configured for receiving a transmission unit. Thus, the carrier part may be configured as a cover to separate these chambers from each other. In such a configuration, different chambers may be provided while keeping the design of the housing assembly simple. It is noted that due to the fact that the carrier part is entirely provided in the interior of the housing assembly, subdividing the interior of the housing assembly into different chambers using the carrier part does not affect the separation of the interior of the housing assembly from the exterior of the housing assembly. Put otherwise, using the carrier part, the interior of the housing assembly may be subdivided into different chambers without creating additional connection interfaces, e.g. needing sealing, in the outer shell or outer enclosure of the housing assembly. This enhances the flexibility as far as chambers in the interior of the housing assembly are concerned while keeping the housing assembly structurally simple.

According to an example, the carrier part comprises an extending portion, wherein at least one coolant channel is provided on the extending portion. The extending portion is a portion extending from remaining portions of the carrier part. Thus, the extending portion may also be called a protruding portion or protrusion. In particular, the extending portion may extend from a face of the carrier part into the first chamber. The extending portion may be used for positioning, e.g. centering, the carrier part with respect to the first housing part and/or the second housing part. The extending portion can be configured as a substantially circular portion. The extending portion can be configured as a portion extending at least partially into the first chamber. The extending portion can be configured as at least partially forming a portion of a wall delimiting the first chamber when the first housing part and the carrier part are attached to each other. The fact that at least one coolant channel is provided on the extending portion means that a coolant channel is formed on the carrier part. In other words, at least one coolant channel is integrally formed on the carrier part. This allows for a compact design of the housing assembly. Moreover, using the at least one coolant channel allows to reliably cool components arranged in the interior of the housing assembly.

According to an example, the at least one coolant channel is calibrated. This means that the at least one coolant channel is specifically sized such that it represents a desired fluidic resistance. Consequently, using such a calibrated coolant channel, a coolant may be provided at a defined flow rate and/or a defined pressure. In a case in which more than one coolant channel is provided on the carrier part, several or all coolant channels may be calibrated.

According to an example, the at least one coolant channel is configured to guide oil or any other type of coolant used in the electric drive unit comprising the housing assembly.

According to an example, the first housing part and the carrier part at least partially delimit a coolant chamber. In this context, a coolant chamber is a chamber configured to receive coolant. The coolant chamber may be in fluid communication with the at least one coolant channel. Forming the coolant chamber using the first housing part and the carrier part is structurally simple. Moreover, using such a coolant chamber allows to reliably cool components arranged in the interior of the housing assembly. The coolant chamber may be at least partially formed by a recess of the first housing part on the inner surface of the first chamber. Alternatively or additionally, the coolant chamber may be at least partially formed by a recess provided on a surface of the carrier part facing an inner wall portion of the first chamber, in particular on a surface of the extending portion of the carrier part facing an inner wall portion of the first chamber. The respective recess of the first housing part and/or of the carrier part may be extending closed, in particular annularly, around the first chamber.

According to an example, the carrier part comprises a sealing interface configured for sealing the carrier part against an electric machine, in particular against a stator of an electric machine, arranged in the interior of the housing assembly. Thus, in case an electric machine is provided in the interior of the housing assembly, the electric machine, in particular the stator of the electric machine, may be sealed against the carrier part. Thereby, a flow of coolant may be restricted to one side of this sealing. Thereby, the coolant may be specifically kept in a desired zone wherein the coolant is reliably kept away from other zones. The carrier part may comprise a sealing receiving portion like a groove, wherein a sealing element is provided in the receiving portion.

According to an example, the first housing part and the second housing part are connected via a singular sealing element. As has been mentioned before, the first housing part and the second housing part together or conjointly separate an interior of the housing assembly from an exterior of the housing assembly. Thus, using a singular sealing element renders the housing assembly structurally simple without compromising on the separation between the interior of the housing assembly and the exterior of the housing assembly.

According to a further aspect of the present disclosure, a carrier part for a housing assembly according to the present disclosure is provided. The carrier part is configured for supporting at least one drive component. As has been mentioned before, such a carrier part may be configured for being entirely provided in an interior of the housing assembly. Thus, it is not necessary to seal the carrier part with respect to the first housing part and/or the second housing part. Due to this and due to the configuration for supporting at least one drive component, such a carrier part allows for a compact and comparatively simple design of the associated housing assembly.

The carrier part may be essentially plate-shaped or disc-shaped. This leads to a compact design of the carrier part and, thus, the housing assembly in which it may be used.

The carrier part may be configured as a cover for at least one chamber of the housing assembly. This means that the cover part is configured to delimit this at least one chamber of the housing assembly from remaining portions of the interior of the housing assembly. In other words, the carrier part may subdivide the interior of the housing assembly into at least two portions or chambers.

The carrier part may be connectable to the first housing part only. Alternatively, the carrier part may be connectable to the second housing part only. According to a further alternative, the carrier part may be connectable to both the first housing part and the second housing part.

According to an example, the carrier part comprises at least one bearing seat for a shaft. Thus, at least one shaft may be supported on the carrier part. The shaft may be an output shaft of an electric machine, a shaft of a gear unit or a shaft drivingly connecting an electric machine and a gear unit. Providing a bearing seat on the carrier part allows to support shafts where needed. Consequently, the housing assembly and an electric drive unit using the housing assembly may be designed in a compact manner if using such a carrier part.

According to a further example, the carrier part comprises precisely two bearing seats, each configured for supporting a shaft.

In the above examples, the bearing seat may be configured for extending an element, e.g. a shaft, through the carrier part. For this purpose, the bearing seat of the carrier part may comprise a through hole. The element extending through the carrier part may be a shaft extending from one or a first chamber of the interior into another or a second chamber of the interior. Additionally or alternatively, the bearing seat may be configured to separate a first side of the carrier part from a second side of the carrier part. In this alternative, the bearing seat does not comprise a through hole but is entirely formed on one of the first side and the second side of the carrier part.

According to an example, the carrier part is connectable to the first housing part via a substantially circular positioning interface. I.e., a portion of the carrier part which is configured to contact or engage an associated portion of the first housing part in an assembled state of the housing assembly, has a substantially circular geometry. In an example, the portion of the carrier part is formed as a lateral skin surface of a circular cylinder. Alternatively, the portion of the carrier part is formed as a portion of a lateral skin surface of a truncated cone. It is also possible that the portion of the carrier part comprises both a sub-portion formed as a lateral skin surface of a circular cylinder and a sub-portion formed as a portion of a lateral skin surface of a truncated cone. The positioning interface may be configured as a self-centering interface, wherein the carrier part is configured to be centered in the correct position with respect to the first housing part. Altogether, a substantially circular positioning interface allows for simple and reliable positioning of the carrier part with respect to the first housing part.

According to an example, at least one bearing seat is arranged centrically with respect to the positioning interface. Additionally or alternatively, at least one bearing seat is arranged eccentrically with respect to the positioning interface. In any alternative, a bearing and, thus, an associated shaft or drive element may be reliably supported on the carrier part. The concentric and/or eccentric arrangement of the bearing seat ensures flexible positioning of the bearing seats where needed in a specific design of a housing assembly or electric drive unit using the carrier part. It is understood that in a case in which the carrier part comprises a bearing seat, the positioning interface is configured to support loads resulting from the support of a shaft or drive element on the bearing seat.

According to an example, the carrier part is arrangeable between a first chamber configured for receiving an electric machine and a second chamber configured for receiving a transmission unit. Thus, the carrier part may be configured as a cover to separate these chambers from each other. In such a configuration, different chambers may be provided while keeping the design of the housing assembly simple. It is noted that due to the fact that the carrier part may be entirely provided in the interior of the housing assembly, subdividing the interior of the housing assembly into different chambers using the carrier part does not affect the separation of the interior of the housing assembly from the exterior of the housing assembly. Put otherwise, using the carrier part, the interior of the housing assembly may be subdivided into different chambers without creating additional connection interfaces, e.g. needing sealing, in the outer shell or outer enclosure of the housing assembly. This enhances the flexibility as far as chambers in the interior of the housing assembly are concerned while keeping the housing assembly structurally simple.

According to an example, the carrier part comprises an extending portion, wherein at least one coolant channel is provided on the extending portion. The extending portion is a portion extending from remaining portions of the carrier part. Thus, the extending portion may also be called a protruding portion or protrusion. In particular, the extending portion may extend from a face of the carrier part into the first chamber. The extending portion may be used for positioning, e.g. centering, the carrier part with respect to the first housing part and/or the second housing part. The extending portion can be configured as a substantially circular portion. The extending portion can be configured as a portion extending at least partially into the first chamber. The extending portion can be configured as at least partially forming a portion of a wall delimiting the first chamber when the first housing part and the carrier part are attached to each other. The fact that at least one coolant channel is provided on the extending portion means that a coolant channel is formed on the carrier part. In other words, at least one coolant channel is integrally formed on the carrier part. This allows for a compact design of the housing assembly. Moreover, using the at least one coolant channel allows to reliably cool components arranged in the interior of the housing assembly.

According to an example, the at least one coolant channel is calibrated. This means that the at least one coolant channel is specifically sized such that it represents a desired fluidic resistance. Consequently, using such a calibrated coolant channel, a coolant may be provided at a defined flow rate and/or a defined pressure. In a case in which more than one coolant channel is provided on the carrier part, several or all coolant channels may be calibrated.

According to an example, the at least one coolant channel is configured to guide oil or any other type of coolant used in the electric drive unit comprising the housing assembly.

According to an example, the carrier part is configured to at least partially delimit a coolant chamber, e.g. together with the first housing part. In this context, a coolant chamber is a chamber configured to receive coolant. The coolant chamber may be in fluid communication with the at least one coolant channel. Forming the coolant chamber using the carrier part is structurally simple. Moreover, using such a coolant chamber allows to reliably cool components arranged in the interior of the housing assembly. The coolant chamber may be at least partially formed by a recess provided on a surface of the carrier part facing an inner wall portion of the first chamber, in particular on a surface of the extending portion of the carrier part facing an inner wall portion of the first chamber. The respective recess of the first housing part and/or of the carrier part may be extending closed, in particular annularly, around the first chamber.

According to an example, the carrier part comprises a sealing interface configured for sealing the carrier part against an electric machine, in particular against a stator of an electric machine, arranged in the interior of the housing assembly. Thus, in case an electric machine is provided in the interior of the housing assembly, the electric machine, in particular the stator of the electric machine, may be sealed against the carrier part. Thereby, a flow of coolant may be restricted to one side of this sealing. Thereby, the coolant may be specifically kept in a desired zone wherein the coolant is reliably kept away from other zones. The carrier part may comprise a sealing receiving portion like a groove, wherein a sealing element is provided in the receiving portion.

According to a further aspect, a housing part for a housing assembly according to the disclosure is provided. The housing part according to the present aspect of the present disclosure may form a first housing part as described in connection with the first aspect of the present disclosure or a second housing part as described in connection with the first aspect of the present disclosure. Thus, the housing part is configured to separate an interior of a housing assembly from an exterior of the housing assembly. This is done conjointly or together with another housing part which may be as well a housing part according to the present aspect of the disclosure. Moreover, the housing part may be configured to entirely receive or enclose a carrier part and/or one or more drive components of an electric drive unit of the vehicle.

According to one example, the housing part comprises an interface for at least one output shaft. According to a further example, the housing part comprises precisely one interface for an output shaft. According to a further example, the housing assembly comprises precisely two interfaces for output shafts.

The housing part according to the present aspect of the present disclosure may comprise a recess or cavity for forming at least a portion of at least one chamber for receiving a drive component. Alternatively, the housing part may be formed as a housing cover which is for example plate-shaped.

According to an example, the housing part comprises a substantially circular positioning interface for connecting a carrier part to the housing part. Thus, a portion of the housing part which is configured for contacting or engaging the carrier part has a substantially circular geometry. In an example, the portion of the housing part is formed as a lateral skin surface of a circular cylinder. Alternatively, the portion of the housing part is formed as a portion of a lateral skin surface of a truncated cone. It is also possible that the portion of the housing part comprise both a sub-portion formed as a lateral skin surface of a circular cylinder and a sub-portion formed as a portion of a lateral skin surface of a truncated cone. The positioning interface may be configured as a self-centering interface, such that the carrier part may be centered in the correct position with respect to the housing part. Altogether, a substantially circular positioning interface allows for simple and reliable positioning of the carrier part with respect to the housing part.

According to an example, the housing part further comprises a singular positioning element for angular positioning of the carrier part along the substantially circular positioning interface. The positioning element may be configured as or comprise a bolt or a pin. The positioning element may be configured as a separate part connected to the housing part. Alternatively, the positioning element may be configured as an integral portion of the housing part. In general, the positioning element and the substantially circular positioning interface are configured such that the carrier part can only be attached to the first housing part in one single relative orientation.

According to an example, the housing parts configured to at least partially delimit a coolant chamber. In this context, a coolant chamber is a chamber configured to receive coolant. Forming the coolant chamber using the housing part is structurally simple. Moreover, using such a coolant chamber allows to reliably cool components arranged in the interior of the housing part. The coolant chamber may be at least partially formed by a recess of the housing part on the inner surface of the housing part.

According to a further aspect, an electric drive unit for a vehicle is provided. The electric drive unit comprises a housing assembly according to the present disclosure. Moreover, the drive unit comprises an electric machine arranged in the interior of the housing assembly and a transmission unit arranged in the interior of the housing assembly. The electric machine and the transmission unit are arranged on opposite sides of the carrier part of the housing assembly. As has been mentioned before, the housing assembly according to the present disclosure is compact, structurally simple and facilitates manufacturing. These effects also translate to the electric drive unit comprising such a housing assembly. Moreover, arranging the electric machine and the transmission unit on opposite sides of the carrier part allows the carrier part to support elements of both the electric machine and the transmission unit. Additionally, elements connecting the transmission unit and the electric machine may be supported on the carrier part. Thus, the carrier part may provide several support functionalities. This further enhances the compactness. Moreover, having a carrier part configured for supporting the above-mentioned elements arranged between the transmission unit and the electric machine allow for a reliable support of the above-mentioned elements. Thus, such an electric drive unit is configured to support high power components.

According to an example, the electric machine is arranged in the first chamber of the housing assembly, wherein the transmission unit is arranged in the second chamber of the housing assembly.

According to an example, the transmission unit comprises a gear unit, in particular a cylindrical gear unit and/or a differential gear unit. Thus, the transmission unit may only comprise a cylindrical gear unit, i.e. an assembly of drivingly coupled cylindrical gears. Alternatively, the transmission unit may only comprise a differential gear unit. According to a further alternative, the transmission unit comprises both a cylindrical gear unit and a differential gear unit.

According to an example, the differential gear unit is supported by differential gear unit bearings arranged in bearing seats, wherein the bearing seats are provided on the first housing part and/or on the second housing part instead of being provided on the carrier part. In particular, one bearing seat may be provided on the first housing part and one bearing seat may be provided on the second housing part. As such bearing seats are provided on the first and/or second housing part instead of being provided on the carrier part, the carrier part may comprise a more compact shape and, in particular, may comprise a substantially circular shape. Moreover, compared to other bearings of the electric drive unit and in particular compared to other bearings of the gear unit, differential gear unit bearings are exposed to relatively high loads, in particular to the highest loads in the electric drive unit. By placing differential gear unit bearings, respectively their bearing seats, on the first housing part and/or on the second housing part, a robust structure can be achieved between the differential gear unit bearings and mount points of the electric drive unit for mounting the electric drive unit in a vehicle. Thereby, a stiffer design of the electric drive unit can be realized compared to providing at least one bearing seat for the differential gear unit on the carrier part.

According to an example, the electric drive unit comprises at least one output shaft. If the transmission unit comprises a differential gear unit, the electric drive unit may comprise at least two or precisely two output shafts. These output shafts may be configured to be connected to wheels of an axle of a vehicle, wherein the wheels are arranged on both sides of the vehicle seen in a longitudinal direction of the vehicle. Thereby, torque can be transmitted from the electric drive unit to the wheels of the axle. Thereby, it is possible to arrange the electric drive unit near the respective axle or on the axle or as a part of the axle, which allows a compact axle design. Alternatively, if the electric drive unit comprises only one output shaft which may be directly connected to the electric machine or via the transmission unit, the electric drive unit may be configured to be connected to a separate differential gear unit for applying torque to the wheels of the vehicle. Thereby, a smaller electric drive unit may be realized compared to examples comprising a differential gear unit.

According to one example, the electric drive unit is configured to cool the electric machine, in particular the stator of the electric machine, by a coolant. Thus, the electric drive unit comprises at least one coolant channel and/or at least one coolant chamber. The coolant may be oil. Optionally, the oil may be pressurized.

According to a further aspect, a vehicle comprises an electric drive unit according to the present disclosure. Thus, the vehicle is configured to be driven by the electric machine of the electric drive unit. Due to the fact that the electric drive unit is compact, the electric drive unit is space-saving within the vehicle such that the saved space may be used for other components of the vehicle. Due to the fact that the electric drive unit is structurally simple and facilitates manufacturing, the same applies to the vehicle comprising such an electric drive unit.

According to a further aspect, a method for assembling a housing assembly is provided. The method comprises providing a first housing part, a second housing part and a carrier part. Furthermore, the method comprises coupling the carrier part to the first housing part or to the second housing part. Additionally, the method comprises connecting the first housing part and the second housing part such that the first housing part and the second housing part together or conjointly separate an interior of the housing assembly from an exterior of the housing assembly and such that the carrier part is entirely provided in the interior of the housing assembly. Thus, this method is comparatively simple. This especially relates to the fact that only two parts, i.e. the first housing part and the second housing part are used for separating the interior of the housing assembly from an exterior of the housing assembly.

It should be noted that the above examples may be combined with each other irrespective of the aspect involved. Accordingly, effects, advantages and/or features which have been mentioned in connection with one out of the housing assembly according to the present disclosure, the carrier part according to the present disclosure, the housing part according to the present disclosure, the electric drive unit according to the present disclosure, the vehicle according to the present disclosure and the method according to the present disclosure also apply to any other of the housing assembly according to the present disclosure, the carrier part according to the present disclosure, the housing part according to the present disclosure, the electric drive unit according to the present disclosure, the vehicle according to the present disclosure and the method according to the present disclosure.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising an electric drive unit according to the present disclosure, wherein the electric drive unit comprises a housing assembly according to the present disclosure and wherein the housing assembly comprises two housing parts according to the present disclosure and a carrier part according to the present disclosure,
- Figure 2: shows the electric drive unit of the vehicle of Figure 1 in more detail, wherein the components of the electric drive unit are represented in a so-called stick diagram,
- Figure 3: shows an exploded view of the electric drive unit of Figure 2,
- Figure 4: shows a first housing part and a carrier part of the electric drive unit as shown in Figure 3 in a separate view,
- Figure 5: shows the first housing part and the carrier part in a lateral view along direction V in Figure 4, wherein the carrier part is connected to the first housing part,
- Figure 6: shows a sectional view of the electric drive unit along plane VI-VI in Figure 5,
- Figure 7: shows a detail VIII of the electric drive unit of Figure 6,
- Figure 8: shows a perspective, separate view of the carrier part of the electric drive unit of Figures 2 to 5, and
- Figure 9: shows an example of arranging multiple cooling supply channels.

### DETAILED DESCRIPTION

The Figures are merely schematic representations and serve only to illustrate examples of the disclosure. Identical or equivalent elements are in principle provided with the same reference signs.

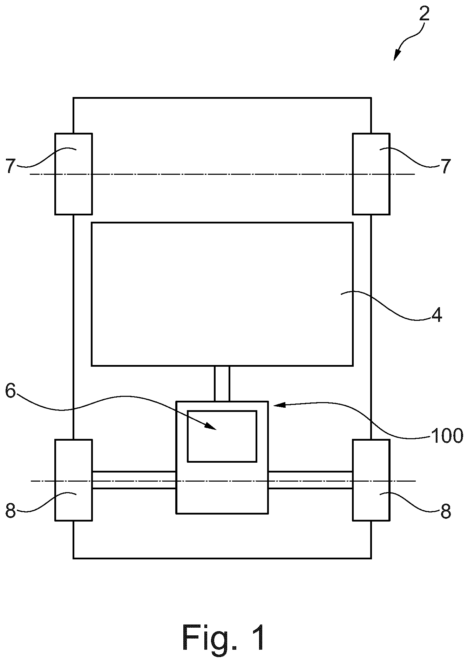

Figure 1 schematically shows a vehicle 2 which in the present example is a battery electric vehicle.

The vehicle 2 comprises a traction battery 4 and an electric drive unit 100. The traction battery 4 and the electric drive unit 100 are electrically coupled.

It is noted that the electric drive unit 100 comprises an inverter unit 6.

In the present example, the electric drive unit 100 is drivingly coupled to the rear wheels 8 of the vehicle 2 such that the rear wheels 8 may be driven using electric energy provided by the traction battery 4 and the electric drive unit 100 with the inverter unit 6. According to another not shown example, the electric drive unit 100 is drivingly coupled to the front wheels 7 of the vehicle 2 such that the front wheels 7 may be driven using electric energy provided by the traction battery 4 and the electric drive unit 100 with the inverter unit 6. According to another not shown example, the electric drive unit 100 is drivingly coupled to the front wheels 7 of the vehicle 2 and to the rear wheels 8 of the vehicle 2 such that the front wheels 7 and the rear wheels 8 may be driven using electric energy provided by the traction battery 4 and the electric drive unit 100 with the inverter unit 6.

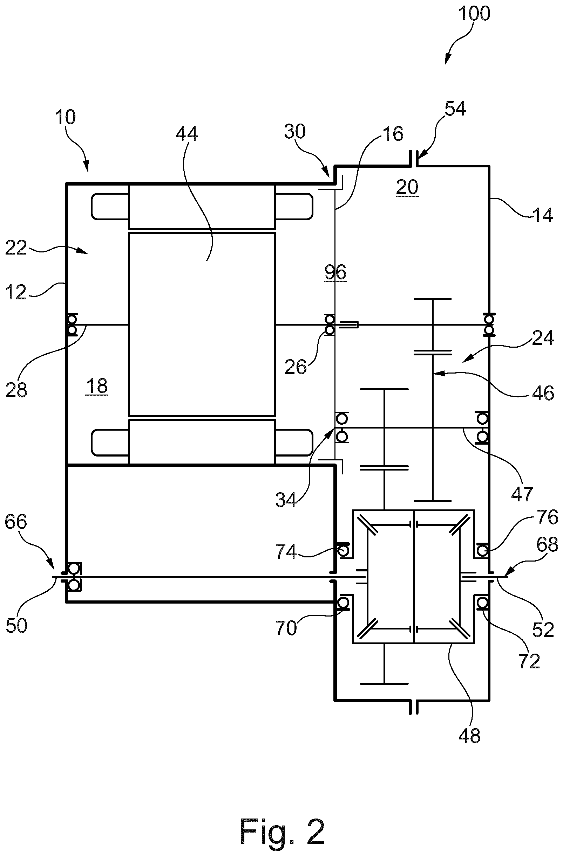

Figure 2 shows the electric drive unit 100 in more detail, wherein the inverter unit 6 is not represented for reasons of better visibility.

The electric drive unit 100 comprises a housing assembly 10 with a first housing part 12, a second housing part 14 and carrier part 16.

The first housing part 12 comprises a substantially cup-shaped portion which forms a first chamber 18.

A drive component 22 is arranged in the first chamber 18.

The second housing part 14 is substantially cup-shaped and forms a portion of a second chamber 20. The remaining portion of the second chamber 20 is formed by the first housing part 12.

A drive component 24 is arranged in the second chamber 20.

The drive component 22 in the first chamber 18 comprises an electric machine 44 connected with a shaft 28.

The electric machine 44 is configured to apply torque to the shaft 28. Thus, the shaft 28 forms an output shaft of the electric machine 44.

In the second chamber 20, the drive component 24 is transmission unit which, in the present example, comprises a gear unit 46 and a differential gear unit 48.

The gear unit 46 comprises two parallel shafts and a single gear stage comprising two cylindrical gears. An input shaft of the gear unit 46 is drivingly coupled to the shaft 28, i.e. the output shaft of the electric machine 44.

The input shaft of the gear unit 46 is drivingly coupled to an output shaft of the gear unit 46 via the gear stage.

Moreover, the gear unit 46 comprises an output gear which drivingly engages a ring gear of the differential gear unit 48.

The differential gear unit 48 further comprises an arrangement of bevel gears. Since this type of a differential gear unit 48 is known as such, a detailed explanation will be omitted here.

The differential gear unit 48 is rotatably supported by differential gear unit bearings 74, 76. The differential gear unit bearing 74 on the side of the differential gear unit 48 facing the first housing part 12 is arranged in a bearing seat 70 provided on the first housing part 12. The differential gear unit bearing 76 on the side of the differential gear unit 48 facing the second housing part 14 is arranged in a bearing seat 72 provided on the second housing part 14. According to this example, the carrier part 16 may comprise a more compact shape since no bearing seat 70, 72 for the differential gear unit 48 needs to be provided on the carrier part 16. Moreover, compared to other bearings of the electric drive unit 10 and, in particular, compared to other bearings of the gear unit 46, the differential gear unit bearings 74, 76 are exposed to relatively high loads, in particular to the highest loads. By placing the differential gear unit bearings 74, 76, respectively their bearing seats 70, 72, on the first housing part 12 and on the second housing part 14, respectively, a robust structure can be achieved between differential gear unit bearings74, 76 and mount points of the electric drive unit 10 for mounting the electric drive unit in a vehicle 2. Thereby, a stiffer design of the electric drive unit 10 can be realized compared to providing at least one bearing seat 70, 72 on the carrier part 16.

The differential gear unit 48 is connected to two output shafts 50, 52 extending on opposite sides of the electric drive unit 100. With respect to a standard forward driving direction of the vehicle 2, these opposite sides correspond to a left side and a right side. Thus, the two output shafts 50, 52 extend leftwards and rightwards, respectively. Respective ends of the output shafts 50, 52 protrude from the housing assembly 10 of the electric drive unit 100 through output shaft interfaces 66, 68. The output shafts 50, 52 may be connected to driven wheels of a vehicle 2, in the present example the rear wheels 8.

The shown arrangement is therefore configured for transferring torque from the shaft 28 via the gear unit 46 and the differential gear unit 48 to the shafts 50, 52 and further to the wheels 8 of the vehicle 2.

In the present example, the gear unit 46 is a cylindrical gear unit. However, the disclosure is not limited thereto.

The carrier part 16 is configured to support the drive component 22, in particular the shaft 28 connected to the electric machine 44. For supporting the drive component 22, the carrier part 16 comprises a bearing seat 26 configured to receive a bearing, in particular a roller bearing.

Moreover, the carrier part 16 is configured to support a shaft of the gear unit 46. To this end, the carrier part comprises a bearing seat 34 configured to receive a bearing, in particular a roller bearing.

The first housing part 12 and the second housing part 14 of the housing assembly 10 are connected to each other via a connection interface 54. Thereby, the first housing part 12 and the second housing part 14 form an interior 96 of the housing assembly 10 and together or conjointly separate the interior 96 from an exterior of the housing assembly 10. In the present example, t the first chamber 18 and the second chamber 20 form part of the interior 96.

The carrier part 16 is entirely provided in the interior 96 of the housing assembly 10. Thus, regarding the housing assembly 10 of the electric drive unit 100 there are two parts forming the outer surface of the housing assembly 10, namely the first housing part 12 and the second housing part 14. Consequently, the housing assembly 10 only comprises one single connection interface 54 for connecting the first housing part 12 and the second housing part 14 and to seal the interior 96 against the exterior of the housing assembly 10. Therefore, this configuration of the housing assembly 10 only needs one particular sealing element for the connection interface 54. In the present example, a singular sealing element is used.

The carrier part 16 itself is attached to the first housing part 12, wherein there is a positioning interface 30 provided between the carrier part 16 and the first housing part 12. The positioning interface 30 is a substantially circular interface between the first housing part 12 and the carrier part 16.

In the shown configuration, the carrier part 16 is configured as a disc configured to close the first chamber 18. More precisely, the carrier part 16 separates the first chamber 18 and the second chamber 20.

As the positioning interface 30 and the carrier part 16 are completely located in the interior 96, there is no need for sealing the connection interface, namely the positioning interface 30, between the carrier part 16 and the first housing part 12 against the exterior. Therefore, the carrier part 16 can be directly attached to the first housing part 12, i.e., without a sealing element in between.

Altogether, the carrier part 16 closes the first chamber 18 and the carrier part 16 comprises a bearing seat 26 for supporting a bearing for the shaft 28 extending through the carrier part 16. In the present example, the shaft 28 extends through a carrier part interface formed as a through hole into the second chamber 20.

The carrier part 16 further comprises a bearing seat 34 on a surface of the carrier part 16 facing to the second chamber 20. This bearing seat 34 is configured to receive a bearing, particularly a roller bearing, for supporting a shaft 47 of the gear unit 46.

Thus, in case the carrier part 16 needs to be exchanged, only the second housing part 14 and the gear unit 46 must be detached, wherein the carrier part 16 can be removed along the axial direction of the shaft 28. In particular, the differential gear unit 48 and the electric machine 44 can be left in position in the housing assembly 10 as shown in the drawing, if the differential gear unit 48 and the carrier part 16 do not overlap with each other in the axial direction of the shaft 28.

On the other hand, assembling a housing assembly 10 comprises a first step of providing the first housing part 12, the second housing part 14 and the carrier part 16.

Subsequently, the electric machine 44 or, more generally speaking the drive component 22 may be arranged in the first chamber 18.

Thereafter, the carrier part 16 is coupled to the first housing part 12.

In a next step, the gear unit 46 and the differential gear unit 48 may be arranged the portion of the second chamber 20 formed by the first part 12 or in the portion of the second chamber 20 formed by the second housing part 14.

Then, the first housing part 12 and the second housing 14 part are connected such that the first housing part 12 and the second housing part 14 together separate an interior 96 of the housing assembly 10 from an exterior 98 of the housing assembly 10 and such that the carrier part 16 is entirely provided in the interior 96 of the housing assembly 10.

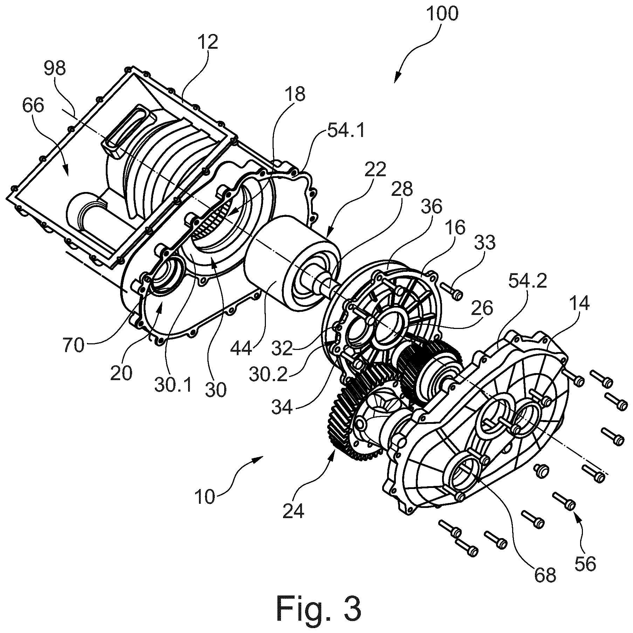

As may be seen best in Figure 3, the first housing part 12 and the second housing part 14 are configured to be connected by a connection interface 54, wherein a first connection interface portion 54.1 of the first housing part 12 and a second interface portion 54.2 of the second housing part 14 are configured to be connected by fastening means 56, in particular threaded fastening means like threaded bolts or screws.

As has been mentioned before, the connection interface 54 is the only interface to be sealed against the exterior of the housing assembly 10. For sealing, a particular sealing element is needed. Other interfaces can be sealed by common sealing elements like dynamic sealing rings for sealing the output shaft interfaces 66, 68 or O-rings for sealing interfaces with non-moving elements like electrical lines as these interfaces may be of substantially circular shape.

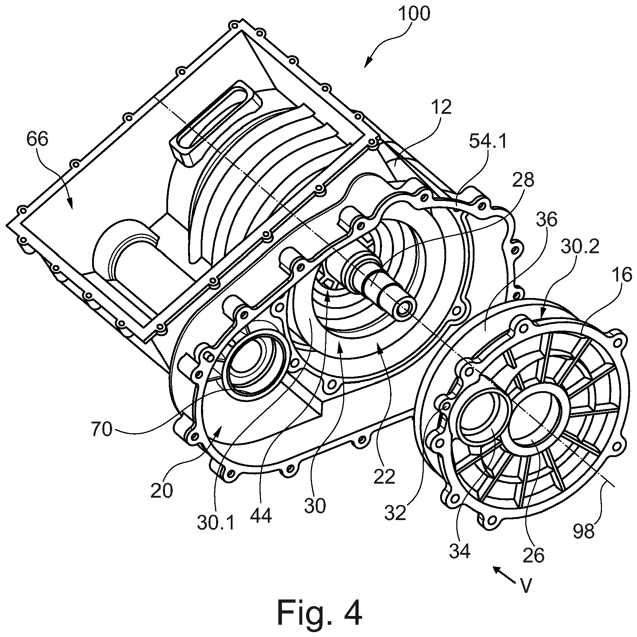

The first chamber 12 and the drive component 22, i.e. the electric machine 44 and the shaft 28, are arranged coaxially to each other as indicated by the common axis 98 in the drawing. This allows a relatively easy assembling of the component 22 in the first chamber 12 as it must only be moved along the axis 98 from the position shown in Figure 3 into a position in the first chamber 12 as shown in Figure 4.

The carrier part 16 according to this example is of a substantially circular shape and configured to close the first chamber 18. For this purpose, a positioning interface 30 is provided comprising a first positioning interface portion 30.1 located on the first housing part 12 and a second positioning interface portion 30.2 located on the second housing part 14 (see for example Figure 3 or 4).

The first positioning interface portion 30.1 is substantially circular surrounding the opening of the first chamber 18 and arranged coaxially to the axis 98. More precisely, the first positioning interface portion 30.1 is shaped as an outer lateral skin surface of a circular cylinder.

The positioning interface portion 30.2 is configured as a substantially circular portion extending radially from the carrier part 16 with respect to the axis 98. More precisely, also the second positioning interface portion 30.2 is shaped as an outer lateral skin surface of a circular cylinder.

Both interface portions 30.1, 30.2 can be configured to self-center the carrier part 16 in the intended position, wherein the carrier part 16 closes the first chamber 18 against the second chamber 20, wherein only the shaft 28 extends from the first chamber 18 through the carrier part 16 into the second chamber 20.

As shown in Figure 2 to 5, since the bearing seats 70, 72 are arranged on the first housing part 12 and the second housing part 14, respectively, instead of being arranged on the carrier part 16, the realization of the compact and substantial circular shape of the carrier part 16 is possible.

As shown in Figure 3, the carrier part 16 and the first housing part 12 are configured to be connected by fastening means 33 configured to engage in corresponding holes on the first housing part 12 and the carrier part 16 respectively. The fastening means 33 may be configured as threaded fastening means like threaded bolts or screws.

The carrier part 16 further comprises an extending portion 36 extending axially with respect to the axis 98 from the surface of the carrier part 16 facing the first chamber 18. The extending portion 36 may be regarded as a collar extending axially from the remaining portions of the carrier part 16.

This extending portion according to this example is inserted in the first chamber 18 when the carrier part 16 is attached to the first housing part 12. The extending portion 36 may be configured to abut radially with respect to the axis 98 at least partially to a portion of the inner wall of the first chamber 18 for sealing the first chamber 18 and/or for self-centering the carrier part 16.

For angular arrangement of the carrier part 16, the carrier part 16 comprises an engaging interface 32 arranged radially spaced apart from the axis 98 and configured as a hole on the circumference of the carrier part 16. For angular arrangement, this positioning interface is configured to engage with a positioning element like a dowel pin attached to the first housing part 12, thereby allowing only one angular arrangement of the carrier part 16 with respect to the first housing part 12.

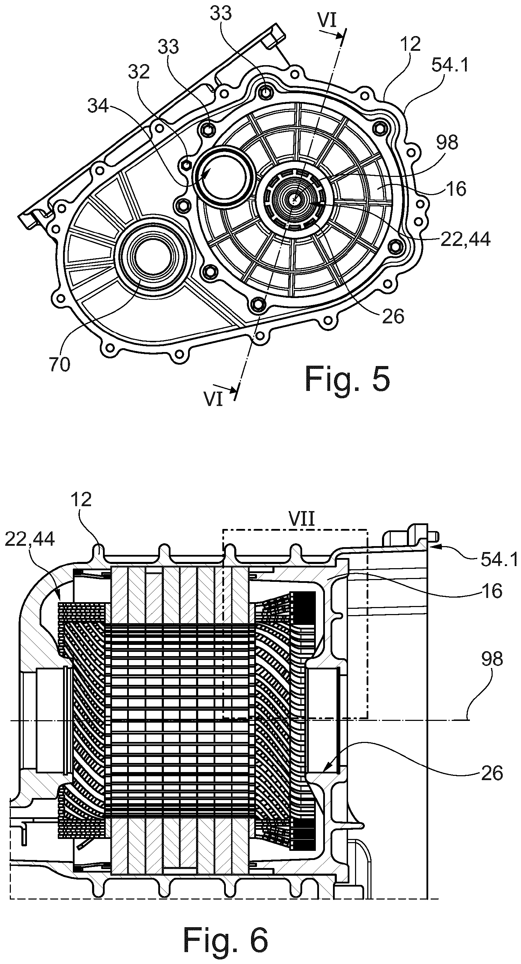

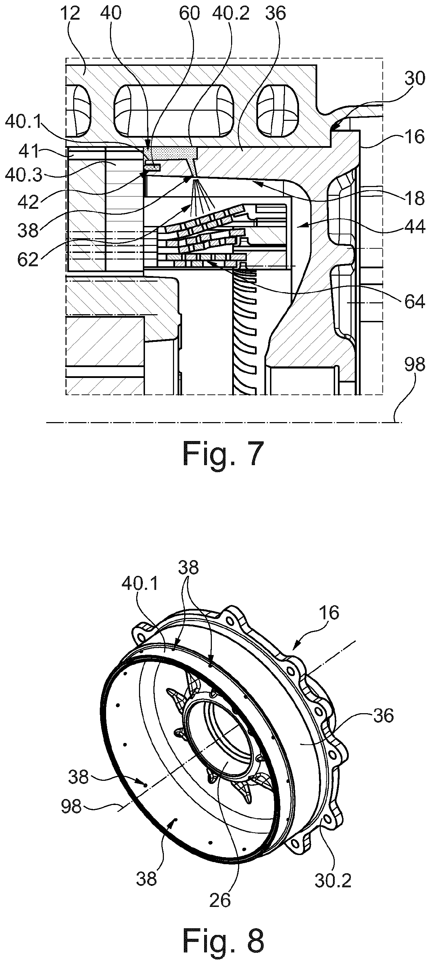

As may be seen best in Figures 6 and 7, the extending portion 36 additionally comprises a radial recess forming a first coolant chamber portion 40.1, wherein the first coolant chamber portion 40.1 is arranged at an end of the extending portion 36 facing away from the carrier part 16 with respect to the axle 98.

The first coolant chamber portion 40.1 completely extends circumferentially around the extending portion 36.

The first coolant chamber portion 40.1 is fluidically connected to a plurality of coolant channels 38 which, in the present example, are calibrated. Thus, a coolant, e.g. oil, can be supplied through the coolant channels 38.

As shown in Figure 7, the carrier part 16 is connected to the first housing part 12, wherein the positioning interface 30 is established. The extending portion 36 radially abuts to the inner wall of the first chamber 18, thereby closing the first chamber 18.

Along the axis 98, the first coolant chamber portion 40.1 delimits a coolant chamber 40 radially inwards and axially to the right. The coolant chamber 40 is further delimited radially outwards by a second coolant chamber portion 40.2 formed by a portion of the inner wall of the first chamber 18. Further, the coolant chamber 40 is delimited axially to the left by a third coolant chamber portion 40.3 formed by a portion of the stator yoke comprising steel laminates. The coolant chamber 40 extends circumferentially around the axis 98.

For sealing the coolant chamber 40 against the first chamber 18 and/or against the stator yoke, a sealing interface 42 is provided between the first coolant chamber portion 40.1 and the third coolant chamber portion 40.3. The sealing interface comprises a sealing element 60 arranged in a circumferential groove at the tip left end of the extending portion 36.

A coolant supply channel 41 is further provided. The coolant supply channel 41 axially extends from the left to the right and is connected to the coolant chamber 40. In the present example, the coolant supply channel 41 is configured to supply pressurized oil for cooling into the coolant chamber 40. It is noted that in other examples, other types of coolant may be used.

The oil in the coolant chamber 40 is used for cooling the drive component, in the present example the electric machine 44, arranged in the first chamber 18.

In the detailed view of Figure 7, one of the coolant channels 38 is shown in a sectional view. The coolant channel 38 connects the coolant chamber 40 and an area surrounded by the extending portion 36.

In the present example, the electric machine 44 is arranged in the first chamber 18 such that a portion of the stator 64 is arranged in the area surrounded by the extending portion 36, wherein the coolant channels 38 are configured to supply cooling agent 62 from the coolant chamber 40 to the stator 64, in particular, to the end windings of the stator 64, for cooling. Therefore, no further element for forming a coolant chamber and/or a coolant channel is needed.

Besides cooling a portion of the stator 64 as shown in the drawing, according to other examples, the coolant chamber portions 40.1, 40.2, 40.3 are configured to form a coolant chamber 40 in connection with coolant openings 38 for cooling the whole stator 64. E.g., the coolant chamber 40 may substantially extend axially along the whole first chamber 18 and/or there are several coolant openings 38 axially spaced apart from each other arranged on the extending portion 36.

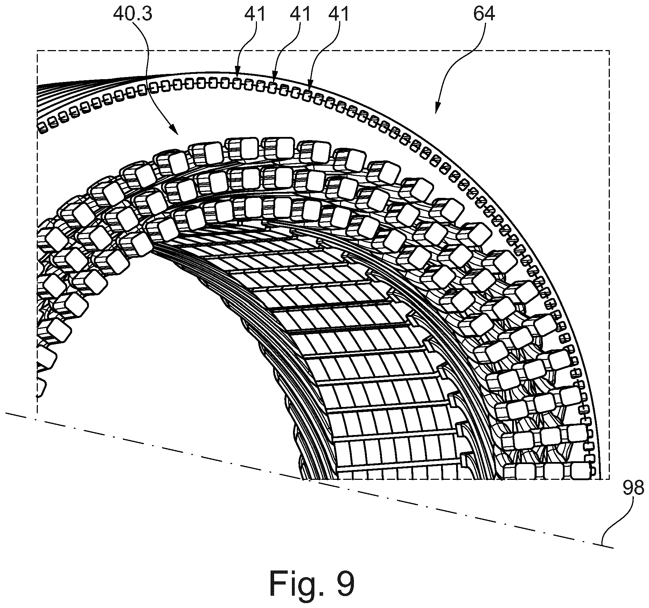

Figure 9 shows an example of arranging multiple cooling supply channels.

A perspective view of a detail of a stator 64 of an electric machine is shown. The electric machine may be the machine 44 shown in Fig. 7. For reasons of clarity, the drawing shows only some features of this example.

The third coolant chamber portion 40.3 formed by a portion of the yoke of the stator 64 is shown as an end face of the yoke perpendicular to the axis 98. The stator 64 is arranged coaxially to the axis 98. Extending in parallel to one another and in parallel to the axis 98, multiple cooling supply channels 41 are arranged extending through the stator 64.

According to this example, the cooling supply channels 41 may be arranged on a virtual circle line sown by the dashed line coaxially to the axis 98. According to this example, the cooling supply channels 41 are arranged regularly spaced apart from each other along the virtual circle. This regular arrangement of the cooling supply channels 41 allows a regularly distributed flow of cooling agent like pressurized oil for cooling through the stator along the axis 98.

As the cooling supply channels 41 end on the surface of the coolant chamber portion 40.3, whereby they are in communication with the coolant chamber 40 shown in Figure 7 extending along the axis 98 for example, cooling agent like pressurized oil may be supplied through the multiple of cooling channels 41 to the coolant chamber 40 extending circularly around the axis 98.

According to this example, the cooling supply channels 41 may be configured to cool the stator 64 when cooling agent like pressurized oil is supplied through the cooling supply channels 41 along the axis 98 to the chamber portion 40.3. I.e., besides cooling the stator 64, respectively the end windings as shown in Figure 7 by supplying the cooling agent like oil on the stator 64 from the coolant channel 38, the remaining stator 64 may be already cooled by the cooling agent like pressurized oil or supplied via the multiple of cooling channels 41. The cooling supply channels 41 therefore constitute the main cooling jacket of the stator 64.

Generally, the housing assembly 10 according to the present disclosure and in particular as shown in the Figures may comprise further openings and interfaces to the exterior of the housing besides the connection interface 54. However, these openings and interfaces are configured to be sealed or closed by commonly available sealing elements like O-rings.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 2: vehicle
- 4: traction battery
- 6: inverter unit
- 7: front wheel
- 8: rear wheel
- 10: housing assembly
- 12: first housing part
- 14: second housing part
- 16: carrier part
- 18: first chamber
- 20: second chamber
- 22: drive component
- 24: drive component
- 26: bearing seat
- 28: shaft
- 30: positioning interface
- 30.1: first positioning interface portion
- 30.2: second positioning interface portion
- 32: engaging interface
- 33: fastening means
- 34: bearing seat
- 36: extending portion
- 38: coolant channel
- 40: coolant chamber
- 40.1: first coolant chamber portion
- 40.2: second coolant chamber portion
- 40.3: third coolant chamber portion
- 41: coolant supply channel
- 42: sealing interface
- 44: electric machine
- 46: gear unit
- 47: intermediate shaft
- 48: differential gear unit
- 50: output shaft
- 52: output shaft
- 54: connection interface
- 54.1: first interface portion
- 54.2: second interface portion
- 56: fastening means
- 60: sealing element
- 62: cooling agent
- 64: stator
- 66: output shaft interface
- 68: output shaft interface
- 70: bearing seat
- 72: bearing seat
- 74: differential gear unit bearing
- 76: differential gear unit bearing
- 96: interior
- 98: axis
- 100: electric drive unit

## Claims

1. A housing assembly (10) for an electric drive unit (100) of a vehicle, the housing assembly (10) comprising
a first housing part (12) forming at least a portion of at least one chamber (18) for receiving a drive component (22),
a second housing part (14) forming at least a portion of at least one chamber (20) for receiving a drive component (24), and
a carrier part (16) for supporting at least one drive component (22, 24),
wherein the first housing part (12) and the second housing part (14) are connected, wherein the first housing part (12) and the second housing part (14) together separate an interior (96) of the housing assembly (10) from an exterior (98) of the housing assembly (10), and
wherein the carrier part (16) is entirely provided in the interior (96) of the housing assembly (10).

2. The housing assembly (10) according to claim 1, wherein the carrier part (16) comprises at least one bearing seat (26) for a shaft (28).

3. The housing assembly (10) according to claim 1 or 2, wherein the carrier part (16) is connected to the first housing part (12) via a substantially circular positioning interface (30).

4. The housing assembly (10) according to claim 3, further comprising a singular positioning element for angular positioning of the carrier part (16) along the substantially circular positioning interface (30).

5. The housing assembly (10) according to claim 2 and claim 3 or 4, wherein the at least one bearing seat (26) is arranged centrically with respect to the connection interface (30) and/or wherein at least one bearing seat (34) is arranged eccentrically with respect to the connection interface (30).

6. The housing assembly (10) according to any one of the preceding claims, wherein the carrier part (16) is arranged between a first chamber (18) configured for receiving an electric machine and a second chamber (20) configured for receiving a transmission unit.

7. The housing assembly (10) according to any one of the preceding claims, wherein the carrier (16) part comprises an extending portion (36), wherein at least one coolant channel (38) is provided on the extending portion (36).

8. The housing assembly (10) according to any one of the preceding claims, wherein the first housing part (12) and the carrier part (16) at least partially delimit a coolant chamber (40).

9. The housing assembly (10) according to any one of the preceding claims, wherein the carrier part (16) comprises a sealing interface (42) configured for sealing the carrier part against an electric machine arranged in the interior (96) of the housing assembly (10).

10. The housing assembly (10) according to any one of the preceding claims, wherein the first housing part (12) and the second housing part (14) are connected via a singular sealing element.

11. A carrier part (16) for a housing assembly (10) according to any one of the preceding claims, wherein the carrier part (16) is configured for supporting at least one drive component (22, 24).

12. A housing part (12, 14) for a housing assembly (10) according to any one of the claims 1 to 10.

13. An electric drive unit (100) for a vehicle, the electric drive unit comprising a housing assembly (10) according to any one of claims 1 to 10, an electric machine (44) arranged in an interior (96) of the housing assembly (10) and a transmission unit arranged in the interior (96) of the housing assembly (10), wherein the electric machine and the transmission unit are arranged on opposite sides of the carrier part (16) of the housing assembly (10).

14. A vehicle comprising an electric drive unit (100) according to claim 13.

15. A method for assembling a housing assembly (10), the method comprising providing a first housing part (12), a second housing part (14) and a carrier part (16); coupling the carrier part (16) to the first housing part (12) or to the second housing part (14);
connecting the first housing part (12) and the second housing (14) part such that the first housing part (12) and the second housing part (14) together separate an interior (96) of the housing assembly (10) from an exterior (98) of the housing assembly (10) and such that the carrier part (16) is entirely provided in the interior (96) of the housing assembly (10).
